# EUROPEAN PATENT SPECIFICATION

(11) **EP 0 600 408 B1**
(45) Date of publication and mention of the grant of the patent: **29.09.2004**
(21) Application number: 93119202.5
(22) Date of filing: 29.11.1993
(51) Int. Cl.: H04J 3/06, H04L 7/00, H04B 7/26

(54) **Method and apparatus for clock synchronization**
Verfahren und Vorrichtung zur Taktsynchronisierung
Méthode et dispositif de synchronisation d'horloge

(30) Priority: 30.11.1992 JP 31956792
(43) Date of publication of application: 08.06.1994
(73) Proprietor: NEC CORPORATION, Tokyo (JP)
(72) Inventor: Nakano, Fumio, Minato-ku, Tokyo (JP)
(74) Representative: VOSSIUS & PARTNER

(56) References cited:
- EP-A- 0 526 202
- US-A- 3 518 377
- US-A- 4 953 185
- PATENT ABSTRACTS OF JAPAN vol. 012, no. 168 (E-611), 20 May 1988 & JP-A-62 278838 (SHARP CORP), 3 December 1987,

## Description

The present invention relates to a clock synchronizing system, and more particularly to a clock synchronizing system for use in a digital automobile telephone apparatus.

Patent Abstracts of Japan, vol. 012, no. 168 (E-611), May 20, 1988 describe a clock signal regeneration circuit.

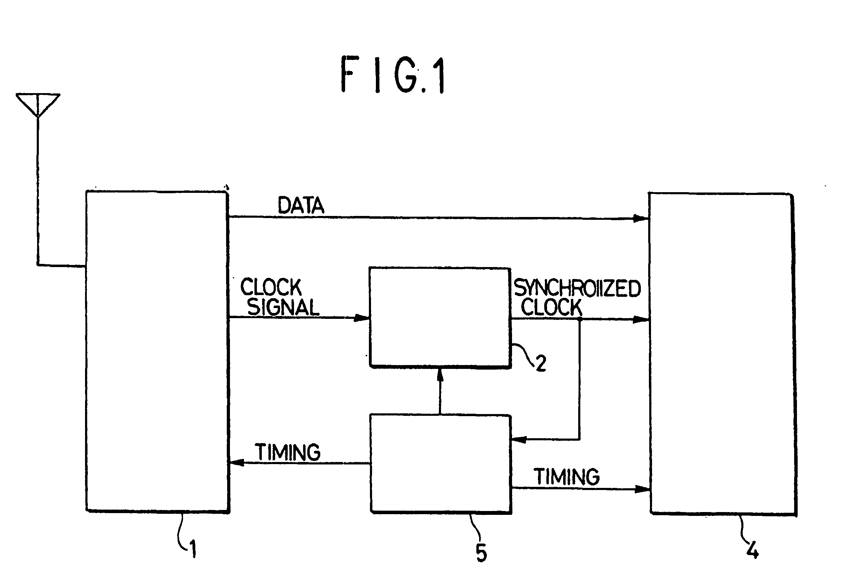

As shown in FIG. 1 of the accompanying drawings, a conventional clock synchronizing system for use in a digital automobile telephone apparatus comprises a receiver 1, a clock synchronizing circuit 2, a multiplexer/demultiplexer 4, and a timing control circuit 5.

The receiver 1 reproduces data from a received radio wave and synchronously extracts a symbol-synchronizing clock signal from the data. The clock synchronizing circuit 2 generates and outputs a bit-synchronizing clock signal from the symbol-synchronizing clock signal or a free-running clock signal in phase with the symbol-synchronizing clock signal extracted by the receiver 1. The timing control circuit 5 counts clock pulses of the bit-synchronizing clock signal, and outputs a timing signal based on the count for controlling the timing of transmission and reception. The multiplexer/demultiplexer 4, which is of the TDMA (Time-Division Multiple Access) type, multiplexes and demultiplexes the time-divided data with the clock and timing signals.

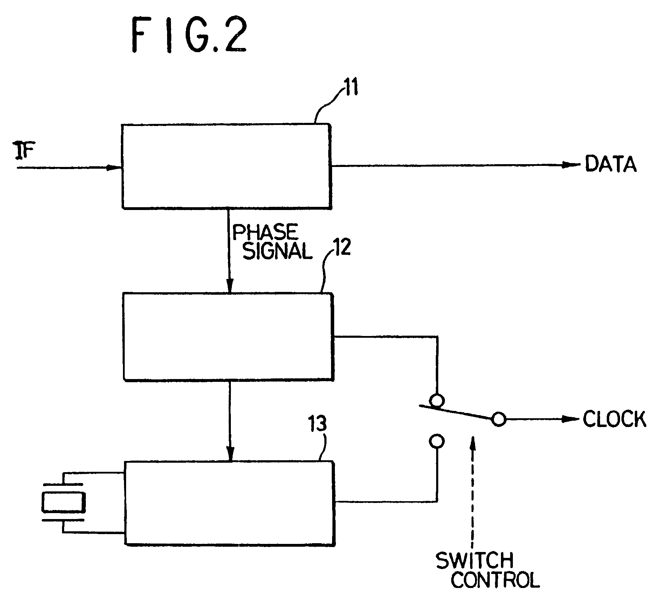

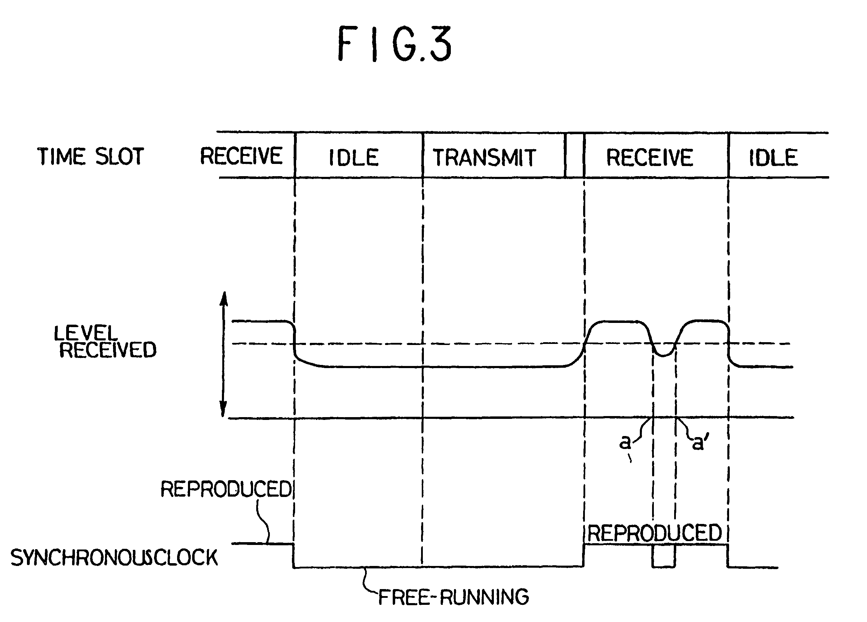

As shown in FIG. 2 of the accompanying drawings, a received analog radio wave signal which has been converted into an intermediate-frequency signal IF is detected with a delay by a delay detector demodulator 11 of the receiver 1, and reproduced and outputted as a received digital data signal. The delay detector demodulator 11 supplies a phase signal to a clock extractor 12. The clock extractor 12 generates, as the synchronizing clock signal, a symbol synchronizing clock signal (e.g., of 21 kbits/s) in synchronism with the received clock signal from the supplied phase signal. An oscillator/frequency divider 13 generates, as the free-running clock signal, a bit synchronizing clock signal (e.g., of 42 kbits/s) whose frequency is twice the frequency of the symbol synchronizing clock signal from the supplied phase signal. The bit synchronizing clock signal may be generated at a frequency very close to twice the frequency of the symbol synchronizing clock signal from a free-running clock signal, rather than the supplied phase signal. If reception, idle, and transmission time slots are arranged repetitively in the order named as shown in FIG. 3 of the accompanying drawings, the synchronizing clock signal extracted from the received radio wave by the clock extractor 12 is outputted during the periods in the reception time slots, even during a period a-a' in which a received level is lower than a threshold, and the free-running clock signal generated by the oscillator/frequency divider 13 and kept in phase with the received clock signal in the reception time slots is outputted during the periods of the idle and transmission time slots.

The multiplexer/demultiplexer 4 controls the timing of transmission and reception of the data with the synchronizing clock signal outputted from the clock synchronizing circuit 2 and the timing signal outputted from the timing control circuit 5 to separate data in either the reception or transmission time slots from the data signal reproduced by the receiver 1.

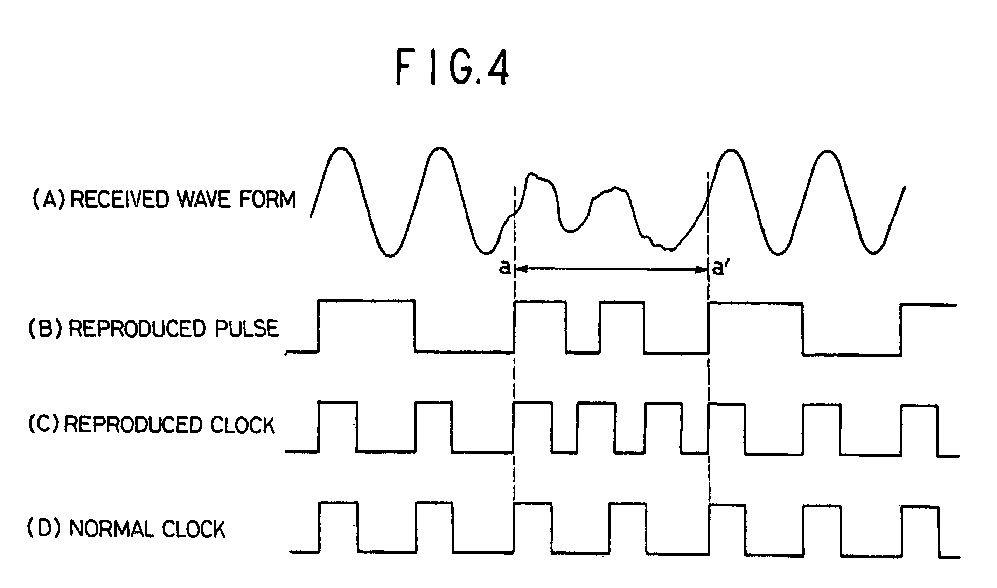

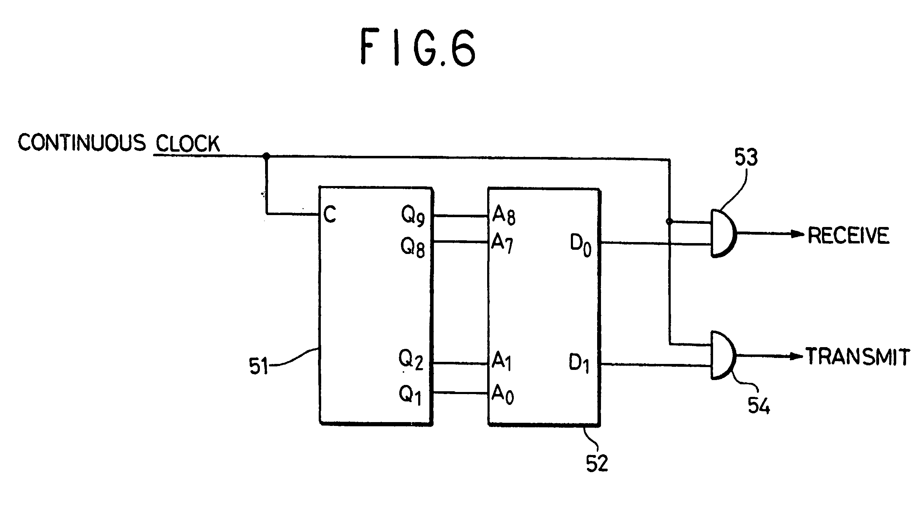

The operation of the multiplexer/demultiplexer 4 will be described below with respect to an example in which the data transmission rate is 42 kbits/s and reception and transmission data of 280 bits are arranged each for 6.6 ms, one on each side of an idle time slot and within one frame of 840 bits for 20 ms, as shown in FIG. 4 of the accompanying drawings. FIG. 6 shows, by way of example, the timing control circuit 5 which generates windows for separating the reception and transmission data. The timing control circuit 5 comprises a counter 51, a decoder 52, and two AND gates 53, 54. The counter 51 is supplied with successive clock pulses in phase with positive-going edges of the transmission data. The counter 51 counts clock pulses one by one up to 839 bits from a reference point 0 at the boundary between the reception and idle time slots, and outputs the count to the decoder 52. The decoder 52 continuously outputs a logic level 1 to either the AND gate 53 or 54 to open the same while the supplied count ranges from 560 to 839 in the transmission time slot and while the supplied count ranges from 238 to 518 in the reception time slot. Each of the AND gates 53, 54 generates a window in either the reception or transmission time slot by ANDing the output signal from the decoder 52 and the synchronizing clock signal.

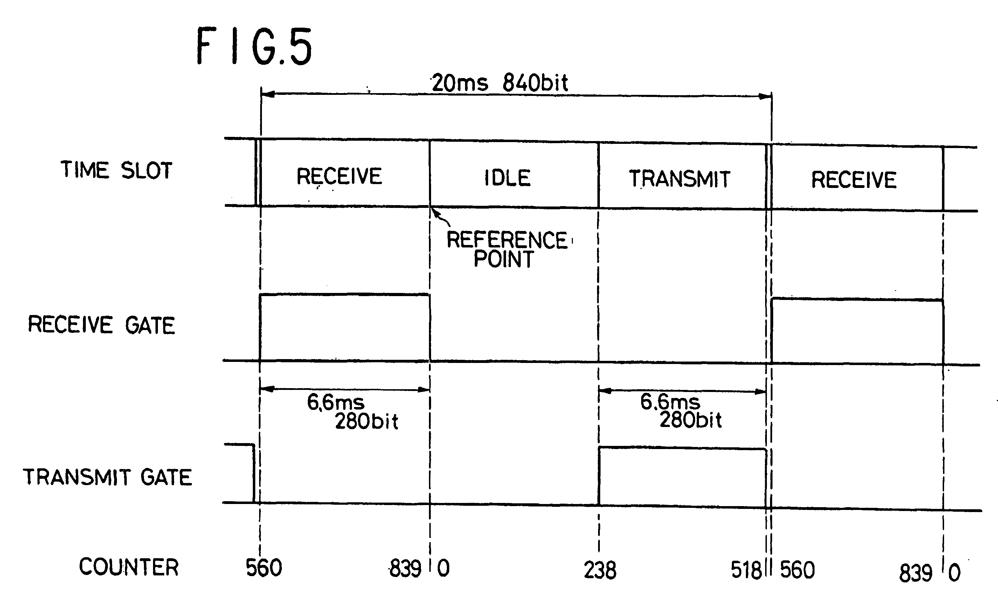

Since the conventional clock synchronizing system controls the timing of transmission and reception by counting clock pulses outputted from the clock synchronizing circuit 2, if the reproduced clock signal goes out of phase due, for example, to a reduction in the level of the received electric field during the reception time slots, as shown a-a' in FIGs. 3 and 5 of the accompanying drawings, the timing of transmission and reception may be disturbed or the reception data may be lost.

It is therefore an object of the present invention to provide a clock synchronizing system which is capable of preventing the timing of transmission and reception from being disturbed as in cases when the level of a received electric field is lowered.

According to the present invention, there is provided a clock synchronizing system comprising a receiver having means for reproducing a received data signal by demodulating a received radio wave, means for extracting a symbol synchronizing clock signal from a variation of the amplitude of the received radio wave, and means for detecting the level of an electric field of the received radio wave; a clock synchronizing circuit having means for correcting the phase of the clock signal extracted by the receiver, means for generating a free-running clock signal in synchronism with the extracted clock signal, and means for selectively outputting the phase-corrected clock signal or the free-running clock signal; a level comparator having means for comparing the detected level of the electric field with a predetermined threshold, and means for controlling the clock synchronizing circuit to select one of the phase-corrected and free-running clock signals in response to the result of comparison; a TDMA multiplexer/demultiplexer for separating time-divided data from the received data signal reproduced by the receiver with the synchronizing clock signal outputted from the clock synchronizing circuit; and a timing control circuit for counting clock pulses outputted from the clock synchronizing circuit to control the timing of transmission and reception of data.

Preferably, the level comparator comprises means for controlling the clock synchronizing circuit to output the phase-corrected clock signal if the detected level of the electric field is in excess of the predetermined threshold, and to output the free-running clock signal if the detected level of the electric field is equal to or less than the predetermined threshold.

Since the clock signal outputted from the clock synchronizing circuit changes to the phase-corrected clock signal reproduced from the received signal or the free-running clock signal depending on the detected level of the electric field under the control of the level comparator, the timing of operation of the multiplexer/ demultiplexer is prevented from being disturbed even when the clock signal goes out of phase due to a reduction in the electric field of the radio wave received by a digital automobile telephone apparatus with which the clock synchronizing system is associated.

The above and other objects, features, and advantages of the present invention will become apparent from the following description when taken in conjunction with the accompanying drawings which illustrate an embodiment of the present invention by way of example.
FIG. 1 is a block diagram of a conventional clock synchronizing apparatus;
FIG. 2 is a block diagram of a clock reproducing circuit in a receiver;
FIG. 3 is a timing chart illustrative of operation of the clock synchronizing circuit 2 shown in FIG. 1;
FIG. 4 is a timing chart of a time slot;
FIG. 5 is a diagram showing each gate for transmission and reception time slots;
FIG. 6 is a block diagram of a timing control circuit 5; and
FIG. 7 is a block diagram of a clock synchronizing apparatus according to the present invention.

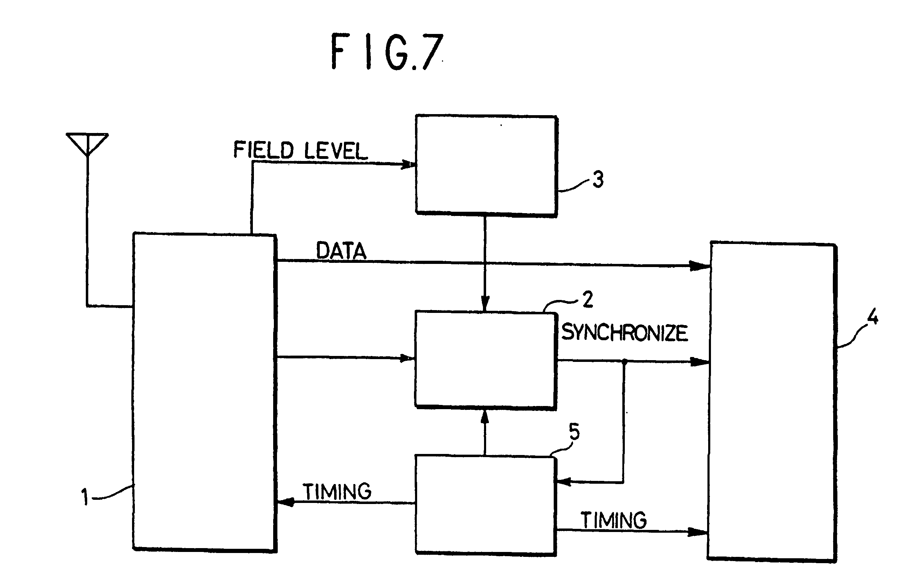

As shown in FIG. 7, a clock synchronizing apparatus according to the present invention comprises a receiver 1, a clock synchronizing circuit 2, a level comparator 3, a multiplexer/demultiplexer 4, and a timing control circuit 5. The receiver 1, the clock synchronizing circuit 2, the multiplexer/demultiplexer 4, and the timing control circuit 5 are identical to those shown in FIG. 1. The level comparator 3 is connected between the receiver 1 and the clock synchronizing circuit 2, for detecting the level of a received radio wave.

The receiver 1 extracts data and symbol synchronizing clock signals from an intermediate-frequency signal converted from a received radio wave, and also smooths the intermediate-frequency signal to produce information indicative of the level of the received radio wave or electric field. The receiver 1 outputs the electric field level information to the level comparator 3. The level comparator 3 compares the electric field level information from the receiver 1 with a predetermined threshold. If the electric field level is higher than the threshold, the level comparator 3 applies a signal to the clock synchronizing circuit 2 to output the synchronizing clock signal. Conversely, if the threshold is higher than the electric field level, the level comparator 3 applies a signal to the clock synchronizing circuit 2 to output the free-running clock signal. The timing control circuit 5 is supplied with the clock signal outputted from the clock synchronizing circuit 2 and outputs a control signal for controlling the timing of transmission and reception of data to the receiver 1 and the multiplexer/demultiplexer 4.

When the level of the received electric field varies in a reception time slot as shown in FIG. 3, the clock signal outputted from the clock synchronizing circuit 2 changes to either the synchronizing clock signal that is synchronously extracted from the variation of the radio wave or the free-running clock signal kept in phase, depending on the level of the electric field even within the reception time slot. The multiplexer/demultiplexer 4 is supplied with both the synchronizing clock signal, which is constant irrespective of the level of the received electric field, and the timing signal.

## Claims

1. A clock synchronizing method for receiving a radio wave of time division multi-access system, comprising the steps of:
extracting a symbol synchronizing clock signal from a variation of the amplitude of the received radio wave and at the same time detecting a level of an electric field of the received radio wave;
reproducing a bit synchronizing clock signal from the extracted clock signal of symbol synchronizing and generating a free-running clock signal in synchronism with the extracted clock signal;
comparing the detected level of the electric field with a predetermined threshold value;
outputting the bit synchronizing clock signal reproduced when the detected level is higher than the predetermined value, and otherwise outputting the free-running clock signal while maintaining the synchronism with the extracted clock signal;
generating a timing control signal by counting outputted clock pulses;
and
controlling the timing of transmission and reception of data.

2. A clock synchronizing apparatus comprising:
a receiver (1) having means (11) for reproducing a received data signal by demodulating a received radio wave, means (12) for extracting a symbol synchronizing clock signal from a variation of the amplitude of the received radio wave, and means for detecting the level of an electric field of the received radio wave;
a clock synchronizing circuit (2) having means for correcting the phase of the clock signal extracted by said receiver (1), means for generating a free-running clock signal in synchronism with the extracted clock signal, and means for selectively outputting the phase-corrected clock signal or the free-running clock signal;
a level comparator (3) having means for comparing the detected level of the electric field with a predetermined threshold, and means for controlling said clock synchronizing circuit (2) to select one of said phase-corrected and free-running clock signals in response to the result of comparison;
a multiplexer/demultiplexer (4) for separating time-divided data from the received data signal reproduced by said receiver (1) with the synchronizing clock signal out-putted from said clock synchronizing circuit (2); and
a timing control circuit (5) for counting clock pulses outputted from said clock synchronizing circuit (2) to control the timing of transmission and reception of data.

3. The clock synchronizing apparatus according to claim 2, wherein said level comparator (3) comprises means for controlling said clock synchronizing circuit (2) to output the phase-corrected clock signal if the detected level of the electric field is in excess of said predetermined threshold, and to output the free-running clock signal if the detected level of the electric field is equal to or less than said predetermined threshold.

## Patentansprüche

1. Taktsynchronisierverfahren zum Empfangen einer Funkwelle eines Zeitvielfachzugriffssystems mit den folgenden Schritten:
Entnehmen eines Symbolsynchronisier-Taktsignals anhand einer Änderung der Amplitude der empfangenen Funkwelle und gleichzeitiges Erfassen eines Pegels des elektrischen Felds der empfangenen Funkwelle,
Reproduzieren eines Bitsynchronisier-Taktsignals anhand des entnommenen Taktsignals der Symbolsynchronisation und Erzeugen eines freilaufenden Taktsignals synchron mit dem entnommenen Taktsignal,
Vergleichen des erfaßten Pegels des elektrischen Felds mit einem vorgegebenen Schwellenwert,
Ausgeben des Bitsynchronisier-Taktsignals, das reproduziert wird, wenn der erfaßte Pegel höher ist als der vorgegebene Wert, und andernfalls Ausgeben des freilaufenden Taktsignals, während die Synchronität mit dem entnommenen Taktsignal aufrechterhalten wird,
Erzeugen eines Zeitsteuersignals durch Zählen der ausgegebenen Taktimpulse und
Steuern des Zeitablaufs beim Senden und beim Empfang von Daten.

2. Taktsynchronisiervorrichtung, welche aufweist:
einen Empfänger (1) mit Mitteln (11) zum Reproduzieren eines empfangenen Datensignals durch Demodulieren einer empfangenen Funkwelle, Mitteln (12) zum Entnehmen eines Symbolsynchronisier-Taktsignals anhand einer Änderung der Amplitude der empfangenen Funkwelle und Mitteln zum Erfassen des Pegels eines elektrischen Felds der empfangenen Funkwelle,
eine Taktsynchronisierschaltung (2) mit Mitteln zum Korrigieren der Phase des von dem Empfänger (1) entnommenen Taktsignals, Mitteln zum Erzeugen eines freilaufenden Taktsignals synchron mit dem entnommenen Taktsignal und Mitteln zum selektiven Ausgeben des phasenkorrigierten Taktsignals oder des freilaufenden Taktsignals,
einen Pegelvergleicher (3) mit Mitteln zum Vergleichen des erfaßten Pegels des elektrischen Felds mit einem vorgegebenen Schwellenwert und Mitteln zum Steuern der Taktsynchronisierschaltung (2) zum Auswählen des phasenkorrigierten oder des freilaufenden Taktsignals als Antwort auf das Vergleichsergebnis,
einen Multiplexer/Demultiplexer (4) zum Trennen zeitlich unterteilter Daten von dem durch den Empfänger (1) reproduzierten empfangenen Datensignal mit dem von der Taktsynchronisierschaltung (2) ausgegebenen synchronisierenden Taktsignal und
eine Zeitsteuerschaltung (5) zum Zählen der von der Taktsynchronisierschaltung (2) ausgegebenen Taktimpulse, um den Zeitablauf beim Senden und beim Empfang von Daten zu steuern.

3. Taktsynchronisiervorrichtung nach Anspruch 2, wobei der Pegelvergleicher (3) Mittel zum Steuern der Taktsynchronisierschaltung (2) aufweist, so daß sie das phasenkorrigierte Taktsignal ausgibt, wenn der erfaßte Pegel des elektrischen Felds den vorgegebenen Schwellenwert übersteigt, und das freilaufende Taktsignal ausgibt, wenn der erfaßte Pegel des elektrischen Felds kleiner oder gleich dem vorgegebenen Schwellenwert ist.

## Revendications

1. Procédé de synchronisation d'horloge pour recevoir une onde radio d'un système à accès multiple par division dans le temps, comportant les étapes consistant à :
extraire un signal d'horloge de synchronisation de symboles à partir d'une variation de l'amplitude de l'onde radio reçue et en même temps détecter un niveau d'un champ électrique de l'onde radio reçue,
reproduire un signal d'horloge de synchronisation de bits à partir du signal d'horloge extrait de synchronisation de symboles et générer un signal d'horloge non-piloté en synchronisme avec le signal d'horloge extrait,
comparer le niveau détecté du champ électrique à une valeur de seuil prédéterminé,
délivrer en sortie le signal d'horloge de synchronisation de bits reproduit lorsque le niveau détecté est supérieur à la valeur prédéterminée, et sinon délivrer en sortie le signal d'horloge non-piloté tout en maintenant le synchronisme avec le signal d'horloge extrait,
générer un signal de commande de cadencement en comptant les impulsions d'horloge délivrées en sortie,
et
commander le cadencement de transmission et de réception de données.

2. Dispositif de synchronisation d'horloge comportant :
un récepteur (1) ayant des moyens (11) pour reproduire un signal de données reçu en démodulant une onde radio reçue, des moyens (12) pour extraire un signal d'horloge de synchronisation de symboles à partir d'une variation de l'amplitude de l'onde radio reçue, et des moyens pour détecter le niveau d'un champ électrique de l'onde radio reçue,
un circuit de synchronisation d'horloge (2) ayant des moyens pour corriger la phase du signal d'horloge extrait par ledit récepteur (1), des moyens pour générer un signal d'horloge non-piloté en synchronisme avec le signal d'horloge extrait, et des moyens pour délivrer en sortie sélectivement le signal d'horloge ayant subi une correction de phase ou le signal d'horloge non-piloté,
un comparateur de niveau (3) ayant des moyens pour comparer le niveau détecté du champ électrique à un seuil prédéterminé, et des moyens pour commander ledit circuit de synchronisation d'horloge (2) pour sélectionner l'un desdits signaux d'horloge à phase corrigée et non-piloté en réponse au résultat de comparaison,
un multiplexeur/démultiplexeur (4) pour séparer des données à division dans le temps à partir du signal de données reçu reproduit par ledit récepteur (1) avec le signal d'horloge de synchronisation délivré en sortie par ledit circuit de synchronisation d'horloge (2), et
un circuit de commande de cadencement (5) pour compter les impulsions d'horloge délivrées en sortie par ledit circuit de synchronisation d'horloge (2) pour commander le cadencement de transmission et de réception de données.

3. Dispositif de synchronisation d'horloge selon la revendication 2, dans lequel ledit comparateur de niveau (3) comporte des moyens pour commander ledit circuit de synchronisation d'horloge (2) pour délivrer en sortie le signal d'horloge ayant subi une correction de phase si le niveau détecté du champ électrique est supérieur audit seuil prédéterminé, et pour délivrer en sortie le signal d'horloge non-piloté si le niveau détecté du champ électrique est inférieur ou égal audit seuil prédéterminé.
